# EUROPEAN PATENT SPECIFICATION

(11) **EP 2 159 592 B1**
(45) Date of publication and mention of the grant of the patent: **03.08.2011**
(21) Application number: 09168597.4
(22) Date of filing: 25.08.2009
(51) Int. Cl.: G01S 19/34

(54) **Systems and methods for controlling a satellite navigation receiver**
Systeme und Verfahren zur Steuerung eines Satellitennavigationsempfängers
Systèmes et procédés de commande de récepteur de navigation de satellite

(30) Priority: 26.08.2008 US 190118 P; 24.08.2009 US 545994
(43) Date of publication of application: 03.03.2010
(73) Proprietor: O2 Micro, Inc., Santa Clara, CA 95054 (US)
(72) Inventor: Yu, Xiaoguang, 430074, Wuhan (CN); Wang, Hongzhang, 430074, Wuhan (CN)
(74) Representative: Lippert, Stachow & Partner

(56) References cited:
- US-A- 5 592 173
- US-A- 6 133 871
- US-A1- 2005 083 230
- US-B1- 6 222 484
- US-B1- 7 375 682

## Description

### BACKGROUND

A satellite navigation system, e.g., a global positioning system (GPS), allows satellite navigation receivers, e.g., GPS receivers, to determine their locations according to satellite signals. The GPS may include a constellation of more than 24 GPS satellites orbiting the earth. There can be at least four GPS satellites visible at a given time and a given place on the earth surface. Each GPS satellite continuously broadcasts GPS signals at a predetermined frequency. The GPS signals contain time and orbital information of the satellites. A GPS receiver can receive the GPS signals transmitted from at least four GPS satellites synchronously. Based on the time and orbital information of at least four GPS satellites, geographical coordinates of the GPS receiver including latitude, longitude, and altitude can be calculated.

Nowadays, vehicles and electronic devices such as personal digital assistants (PDAs) and cellular phones can be equipped with GPS receivers. The GPS receiver can include multiple acquisition channels and tracking channels, and can work in a boost state or in a normal state. In the boost state, all the acquisition channels and tracking channels are enabled to acquire and track the GPS satellites. If more than four satellites are tracked, the GPS receiver can be switched to the normal state. In the normal state, only one or two channels may be enabled. If some GPS signals of the tracked GPS satellites are lost, the GPS receiver can be switched back to the boost state. However, the conventional GPS receiver has relatively high power consumption. In the document US 2005/083230 A1, a power management system for managing power in a satellite navigation receiver is disclosed with different operation modes. Document US 6,222,484 B1 discloses a personal emergency location system including a GPS receiver and operable in different operation modes. Document US 7,375,682 B1 refers to a method for establishing a position of a device, operable in low power acquisition mode or in fast acquisition mode.

### SUMMARY

A satellite navigation receiver according to the invention includes a processing unit, a clock generator, and a power management interface. The processing unit is operable for locating the satellite navigation receiver according to multiple satellite signals and comprises a plurality of channels operable for acquiring and tracking a plurality of satellites that provide said satellite signals. The clock generator coupled to the processing unit is operable for providing a reference clock to the processing unit. The power management interface coupled to the processing unit and the clock generator is operable for switching the satellite navigation receiver in multiple operation states. The operation states include a sleep state in which the processing unit is powered off and the clock generator is powered on. Further, the operation states comprise an idle state in which all of said channels are disabled when said processing unit is powered on.

### BRIEF DESCRIPTION OF THE DRAWINGS

Features and advantages of embodiments of the claimed subject matter will become apparent as the following detailed description proceeds, and upon reference to the drawings, wherein like numerals depict like parts, and in which:

FIG. 1A illustrates a block diagram of a GPS device, in accordance with one embodiment of the present invention.

FIG. 1B illustrates an example of a processing unit of FIG. 1A, in accordance with one embodiment of the present invention.

FIG. 2 illustrates an example of operation modes of a GPS device, in accordance with one embodiment of the present invention.

FIG. 3 illustrates an example of operation states of a GPS receiver in a continuous positioning mode, in accordance with one embodiment of the present invention.

FIG. 4 illustrates a flowchart of an operation process performed by a GPS receiver in a continuous positioning mode, in accordance with one embodiment of the present invention.

FIG. 5 illustrates an example of operation states of a GPS receiver in an interval positioning mode, in accordance with one embodiment of the present invention.

FIG. 6 illustrates an example of operation states of a GPS receiver in a required positioning mode, in accordance with one embodiment of the present invention.

FIG. 7 illustrates another example of operation states of a GPS receiver, in accordance with one embodiment of the present invention.

FIG. 8 illustrates a flowchart of operations performed by a satellite navigation device, in accordance with one embodiment of the present invention.

### DETAILED DESCRIPTION

Reference will now be made in detail to the embodiments of the present invention. While the invention will be described in conjunction with these embodiments, it will be understood that they are not intended to limit the invention to these embodiments. On the contrary, the invention is intended to cover alternatives, modifications which may be included within the scope of the invention as defined by the appended claims.

Embodiments described herein may be discussed in the general context of computer-executable instructions residing on some form of computer-usable medium, such as program modules, executed by one or more computers or other devices. Generally, program modules include routines, programs, objects, components, data structures, etc., that perform particular tasks or implement particular abstract data types. The functionality of the program modules may be combined or distributed as desired in various embodiments. Some portions of the detailed descriptions which follow are presented in terms of procedures, logic blocks, processing and other symbolic representations of operations on data bits within a computer memory. These descriptions and representations are the means used by those skilled in the data processing arts to most effectively convey the substance of their work to others skilled in the art. In the present application, a procedure, logic block, process, or the like, is conceived to be a self-consistent sequence of steps or instructions leading to a desired result. The steps are those requiring physical manipulations of physical quantities. Usually, although not necessarily, these quantities take the form of electrical or magnetic signals capable of being stored, transferred, combined, compared, and otherwise manipulated in a computer system.

It should be borne in mind, however, that all of these and similar terms are to be associated with the appropriate physical quantities and are merely convenient labels applied to these quantities. Unless specifically stated otherwise as apparent from the following discussions, it is appreciated that throughout the present application, discussions utilizing the terms such as "locating," "providing," "switching," or the like, refer to the actions and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

By way of example, and not limitation, computer-usable media may comprise computer storage media and communication media. Computer storage media includes volatile and nonvolatile, removable and non-removable media implemented in any method or technology for storage of information such as computer-readable instructions, data structures, program modules or other data. Computer storage media includes, but is not limited to, random access memory (RAM), read only memory (ROM), electrically erasable programmable ROM (EEPROM), flash memory or other memory technology, compact disk ROM (CD-ROM), digital versatile disks (DVDs) or other optical storage, magnetic cassettes, magnetic tape, magnetic disk storage or other magnetic storage devices, or any other medium that can be used to store the desired information.

Communication media can embody computer-readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, radio frequency (RF), infrared and other wireless media. Combinations of any of the above should also be included within the scope of computer-readable media.

Furthermore, in the following detailed description of the present invention, numerous specific details are set forth in order to provide a thorough understanding of the present invention. However, it will be recognized by one of ordinary skill in the art that the present invention may be practiced without these specific details. In other instances, well known methods, procedures, components, and circuits have not been described in detail as not to unnecessarily obscure aspects of the present invention.

Embodiments in accordance with the present disclosure provide a satellite navigation receiver that can calculate its geographical location based on satellite signals. The satellite navigation receiver, e.g., a global positioning system (GPS) receiver, includes a processing unit, a clock generator, and a power management interface. Advantageously, the satellite navigation receiver including the processing unit and the clock generator can operate in multiple operation states such as one or more working states (e.g., a boost state, a normal state, and an idle state), a sleep state, and a shut-down state according to user demands or system needs. Therefore, efficiency of the satellite navigation receiver can be improved. Moreover, power consumption of the satellite navigation receiver can be reduced if the satellite navigation receiver is switched to the idle state, the sleep state, or the shut-down state. The invention is described under the context of GPS receivers for illustrative purposes. However, the invention is not so limited and can be implemented in other types of satellite navigation receivers.

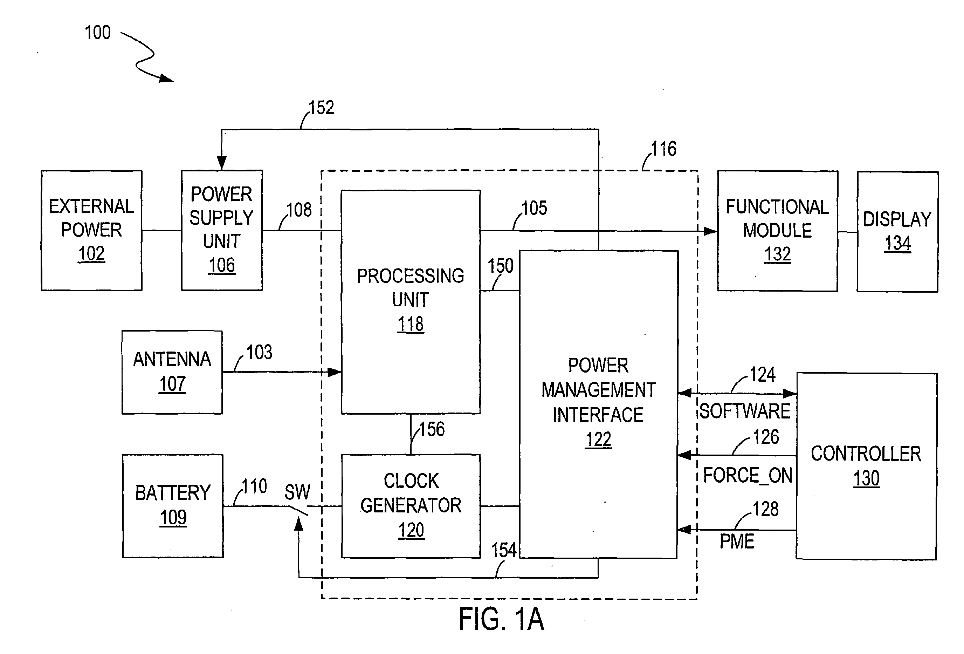

FIG. 1A illustrates a block diagram of a GPS device 100, in accordance with one embodiment of the present invention. In the example of FIG. 1A, the GPS device 100 includes an antenna 107, a GPS receiver 116, and a functional module 132. The antenna 107 is capable of receiving GPS signals 103 transmitted from multiple GPS satellites and providing the GPS signals 103 to the GPS receiver 116.

In one embodiment, the GPS receiver 116 includes a processing unit 118 and a clock generator 120. The processing unit 118 is operable for processing the GPS signals 103, and for locating the GPS device 100 accordingly. The processing unit 118 analyzes acquisition and tracking data obtained from the GPS signals 103 to determine navigation information such as geographical coordinates and velocity of the GPS device 100. The clock generator 120 coupled to the processing unit 118 can be, but is not limited to, a real-time clock unit. The clock generator 120 is operable for providing a reference clock 156 to the processing unit 118. The reference clock 156 can be used by the processing unit 118 to measure a traveling time of the GPS signals 103 from a corresponding satellite to the GPS receiver 116.

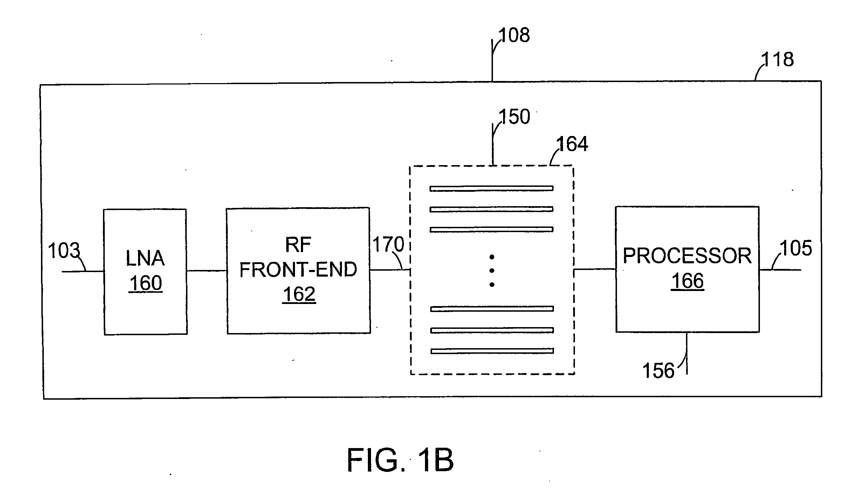

FIG. 1B illustrates an example of the processing unit 118, in accordance with one embodiment of the present invention. Elements labeled the same as in FIG. 1A have similar functions. FIG. 1B is described in combination with FIG. 1A.

In the example of FIG. 1B, the processing unit 118 includes a low-noise amplifier (LNA) 160, a radio frequency (RF) front-end 162, multiple channels 164, and a processor 166. The low-noise amplifier 160 is operable for filtering and amplifying the GPS signals 103. The RF front-end 162 is operable for converting the analog GPS signals 103 to digital GPS satellite data 170.

The channels 164 can receive the GPS satellite data 170 and can acquire and track the GPS satellites by analyzing the GPS satellite data 170. In one embodiment, the multiple channels 164 include acquisition (ACQ) channels and tracking (TRK) channels. The channels 164 can be classified into multiple channel groups. Each channel group can include an acquisition channel and a tracking channel, and can be assigned to process data for a corresponding GPS satellite. More specifically, the acquisition channel can acquire the corresponding satellite according to the GPS satellite data 170. For example, the acquisition channel may be used to analyze the GPS satellite data 170 and determine if the corresponding satellite is within view of (visible to) the GPS receiver 116. If the satellite is acquired by the acquisition channel, a corresponding tracking channel can be used to track the satellite. If the satellite is tracked, the tracking channel provides the acquisition and tracking data to the processor 166. As such, different GPS satellites may be acquired and tracked by different groups of the acquisition channel and the tracking channel respectively.

The processor 166 can be a central processing unit (CPU), a microprocessor, a digital signal processor, or any other such device that can read and execute programming instructions. In one embodiment, the processor 166 can execute machine-executable instructions stored in a machine-readable medium and configure the acquisition channels and tracking channels based on the analysis of the acquisition and tracking data.

In one embodiment, the processor 166 can employ the reference clock 156 to extract a ranging code (e.g., a Coarse/Acquisition code) and navigation data from the acquisition and tracking data. The ranging code includes a pseudorandom noise code (PN or PRN code) that identifies a corresponding satellite. Each satellite has a unique pseudorandom noise code. Pseudoranges between the tracked GPS satellites and the GPS device 100 can be obtained from the ranging code. The navigation data can contain GPS date and time, ephemeris data indicating a position of a corresponding satellite, and almanac data indicating information and status concerning all the satellites. Geographical coordinates of the tracked GPS satellites can be obtained from the navigation data. As such, based on the obtained pseudoranges and the geographical coordinates associated with at least four GPS satellites, the processor 166 can calculate the geographical coordinates of the GPS device 100.

In one embodiment, the processor 166 is further capable of generating a coordinate signal 105 indicative of the geographic coordinates of the GPS device 100 according to a result of the calculation. The processing unit 118 can have other components, and is not limited to the example of FIG. 1B.

Referring to FIG. 1A, the functional module 132 can employ the coordinate signal 105 to perform multiple GPS related functions. In one embodiment, the GPS device 100 further includes a display 134 such as a liquid crystal display (LCD) screen. The display 134 coupled to the functional module 132 is operable for displaying the location of the GPS device 100 based on the coordinate signal 105. For example, the functional module 132 can perform a displaying function which shows the geographical coordinates of the GPS device 100 on the display 134 according to the coordinate signal 105. The functional module 132 can also perform a map function, which highlights the position of the GPS device 100 on a map shown on the display 134 according to the coordinate signal 105.

The processing unit 118 is powered by system power 108. In one embodiment, the GPS device 100 includes a power supply unit 106 operable for receiving power from an external power source 102, and for providing the system power 108 to the GPS receiver 116 accordingly. More specifically, in one embodiment, the external power source 102 can be an alternative current (AC) to direct current (DC) adapter for providing direct current (DC) power. The power supply unit 106 can be a low drop-out linear voltage regulator (LDO), which can convert the DC power to the system power 108 having a voltage level suitable for powering the processing unit 118.

The clock generator 120 is powered by battery power 110. In one embodiment, the GPS device 100 further includes a battery 109 operable for providing the battery power 110. Separately powered, the clock generator 120 and the processing unit 118 can operate separately. In one embodiment, the clock generator 120 can be powered by the battery power 110 to measure time of an operation state of the GPS receiver 116, e.g., a sleep state of the GPS receiver 116 in which the system power 108 to the processing unit 118 is cut off.

In one embodiment, the GPS receiver 116 further includes a power management interface 122 coupled to the processing unit 118 and the clock generator 120. The power management interface 122 is operable for generating multiple switch signals to control the power and channels of the GPS receiver 116. More specifically, the power management interface 122 can generate a power-switch signal 152 to control the system power 108. The power supply unit 106 can receive the power-switch signal 152 and can control the system power 108 accordingly. Moreover, the power management interface 122 can generate a battery-switch signal 154 to control the battery power 110. In one embodiment, the battery 109 is coupled to the clock generator 120 via a switch SW. Thus, the battery power 110 can be switched on/off by the switch SW based on the battery-switch signal 154. Additionally, the power management interface 122 can generate a channel-switch signal 150 to control the channels 164. in one embodiment, the processing unit 118 provides one or more system clocks to the channels 164. The processing unit 118 can enable/disable a channel by switching on/off a corresponding system clock according to the channel-switch signal 150.

In one embodiment, the GPS device 100 further includes a controller 130 coupled to the GPS receiver 116 and operable for providing multiple control signals, e.g., software control commands 124 and hardware control signals (e.g., a FORCE ON signal 126 and a PME signal 128), according to the system needs or user demands. In one embodiment, the controller 130 can be included in the GPS receiver 116, and is not limited to the example of FIG. 1A.

In one embodiment, the control signals, e.g., the software control commands 124, are generated by a navigation software application installed in a machine-readable medium of the controller 130. The navigation software application can include a user interface (UI) for interacting with the user, and can include machine-executable instruction codes for generating the software control commands 124 according to the user demands or the system needs. In one embodiment, the power management interface 122 is coupled to the controller 130 via a universal bus, e.g., a serial universal asynchronous receiver /transmitter (UART) bus. The universal bus can transfer the software control commands 124 generated by the navigation software application to the GPS receiver 116.

In one embodiment, the control signals, e.g., the software control commands or the hardware control signals, can also be generated in response to a hardware action. In one embodiment, the controller 130 can monitor statuses of one or more buttons, e.g., on the GPS device 100, and can generate the control signals according to the statuses. For example, if a FORCE_ON button, e.g., on the GPS device, is pressed, e.g., by the user, the controller 130 can generate an active/inactive FORCE_ON signal 126 to switch on/off the system power 108. Moreover, if a shut-down button, e.g., on the GPS device 100, is pressed, the navigation software application of the controller 130 can generate a shut-down control command.

Furthermore, in one embodiment, the controller 130 can monitor a status of the display 134 and can generate the hardware control signals accordingly. For example, if the display 134 is turned off, e.g., by the user, the controller 130 can generate an inactive power management event (PME) signal 128. The power management interface 122 can disable the channels 164 of the processing unit 118 according to the inactive PME signal 128. If the display 134 is turned on, the controller 130 can generate an active PME signal 128. The power management interface 122 can enable the channels 164 of the processing unit 118 according to the active PME signal 128.

In one embodiment, the power management interface 122 can switch the GPS receiver 116 in multiple operation states by generating the switch signals, e.g., the power-switch signal 152, the battery-switch signal 154, and the channel-switch signal 150. The operation states can include, but are not limited to, one or more working states, a sleep state, and a shut-down state.

More specifically, in one embodiment, the GPS receiver 116 enters the working states if both of the processing unit 118 and the clock generator 120 are powered on. Thus, the GPS receiver 116 continuously works in the working states. The GPS receiver 116 enters the sleep state if the processing unit 118 is powered off and the clock generator 120 is powered on. Thus, the processing unit 118 stops working accordingly. The clock generator 120 continues to generate the reference clock 156 which can be used to measure a time period of the sleep state. The GPS receiver 116 enters the shut-down state if both of the processing unit 118 and the clock generator 120 are powered off. Thus, the processing unit 118 and the clock generator 120 stop working and do not consume power in the shut-down state.

In one embodiment, the working states of the GPS receiver 116 include, but is not limited to, a boost state, a normal state, and an idle state. In the working states such as the boost state, the normal state, and the idle state, the processing unit 118 and the clock generator 120 are both powered on based on the power-switch signal 152 and the battery-switch signal 154. Moreover, the channels 164 can be controlled according to the channel-switch signal 150. For example, the processing unit 118 enables or disables one or more system clocks for the channels 164 according to the channel-switch signal 150.

In the boost state, all the channels 164 including the acquisition channels and the tracking channels are enabled. In the normal state, a predetermined number of the channels 164 are disabled and other channels remain enabled. In the idle state, all of the channels 164 are disabled. Other components of the processing unit 118 can continue operating. For example, in the idle state, the processing unit 118 disables all of the system clocks for the channels 164. Although the processing unit 118 is powered on, all of the channels 164 stop working in the idle state. The processing unit 118 stops tracking the GPS satellites, but can generate the coordinate signal 105 in the idle state. Since all the channels 164 are disabled in the idle state, the power consumption of the GPS device 100 can be reduced.

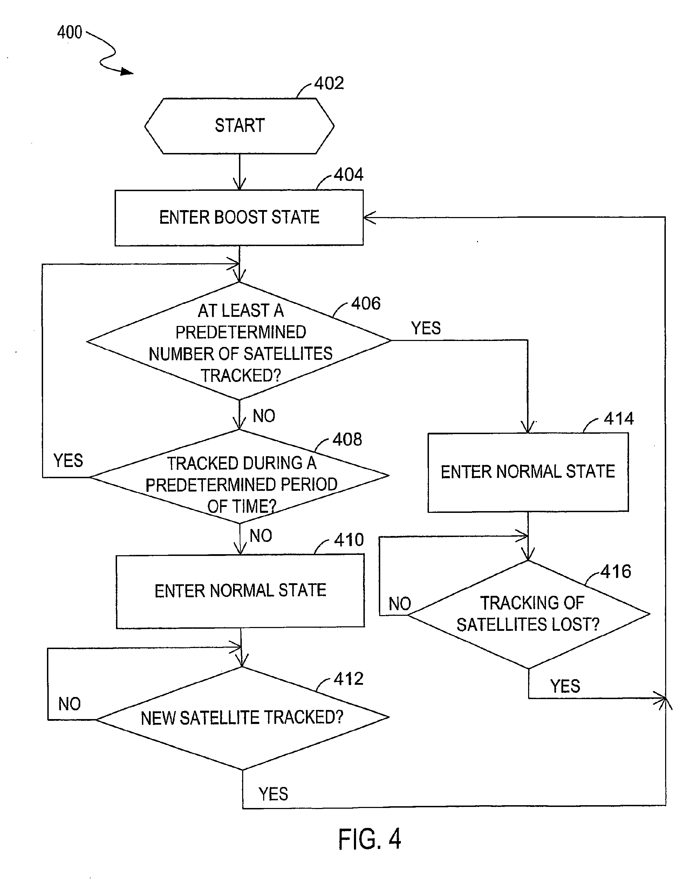

To switch the GPS receiver 116 among different operation states, the power management interface 122 can receive the control signals, e.g., software control commands and hardware control signals, from the controller 130, and can generate the switch signals, e.g., the power-switch signal 152, the battery-switch signal 154, and the channel-switch signal 150, accordingly. Alternatively, the power management interface 122 can automatically switch the GPS receiver 116 among different operation states according to the system needs. For example, the power management interface 122 can monitor statuses of the channels 164, and can automatically switch the GPS receiver 116 among the boost state, the normal state, and the idle state according to the statuses, which will be detailed described in relation to FIG. 4. The power management interface 122 can also employ the reference clock 156 to measure time of an operation state, e.g., the sleep state. If a predetermined time period for the operation state expires, the power management interface 122 can automatically switch the GPS receiver 116 to another state, e.g., the boost state. In this circumstance, the power management interface 122 can operate without being controlled by the controller 130.

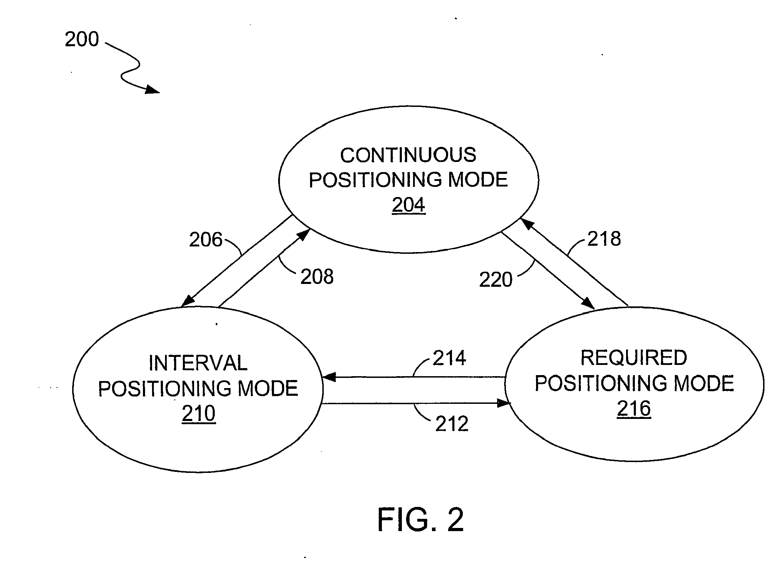

In one embodiment, the GPS device 100 can operate in a plurality of operation modes such as a continuously positioning mode, an interval positioning mode, and a required positioning mode. The controller 130 can select different operation modes to enable the GPS receiver 116 to operate in different operation states, e.g., the boost state, the normal state, the idle state, and the sleep state, which will be detailed described in FIG. 2- FIG. 6.

Advantageously, the GPS receiver 116 can operate in different operation states according to the user demands or system needs. Thus, the efficiency of the GPS device 100 can be improved. Moreover, the power consumption of the GPS device 100 can be reduced when the GPS receiver 116 operates in the idle state, the sleep state, or the shut-down state.

FIG. 2 illustrates an example of operation modes of the GPS device 100, in accordance with one embodiment of the present invention. Fig 2 is described in combination with FIG. 1A. The operation modes of the GPS device 100 can include a continuous positioning mode 204, an interval positioning mode 210, and a required positioning mode 216. In one embodiment, the flowchart in FIG. 2 can be implemented as machine-executable instructions stored in a machine-readable medium.

In the continuous positioning mode 204, the GPS receiver 116 is enabled to operate in the working states (e.g., the boost state, the normal state, or the idle state) without entering the sleep state. Thus, the processing unit 118 keeps operating, e.g., calculating the geographic coordinates of the GPS device 100, in the continuous positioning mode 204.

In the interval positioning mode 210, the GPS receiver 116 is enabled to alternately operate in the working states for a first predetermined time period T1, and operate in the sleep state for a second predetermined time period T2. For example, the navigation software application of the controller 130 can prompt the user to set an operation time and a sleep time. The GPS receiver 116 can operate in the working states for the time period T1 according to the operation time, and can be suspended in the sleep state for the time period T2 according to the sleep time.

In the required positioning mode 216, the GPS receiver 116 operates in the working states for a predetermined time period T3, and operates in the sleep state until the power management interface 122 receives a signal from the controller 130 to activate the GPS receiver 116. For example, the navigation software application of the controller 130 can prompt the user to set an operation time. The GPS receiver 116 can operate in the working states for the time period T3 according to the operation time. After T3 is expired, the GPS receiver 116 can enter the sleep state. The power management interface 122 can generate an inactive power-switch signal 152 to cut off the system power 108 in the sleep state. If the GPS receiver 116 is required to operate, e.g., if the FORCE_ON button is pressed, the controller 130 can generate a control signal, e.g., the FORCE_ON signal, to activate the GPS receiver 116. Upon receiving the FORCE_ON signal, the power management interface 122 can generate an active power-switch signal 152 to recover the system power 108 accordingly.

In one embodiment, the controller 130 selects the continuous positioning mode 204 by default. For example, if the GPS device 100 is powered on or is cold booted, the GPS device 100 can enter the continuous positioning mode 204 by default. In another example, the GPS device 100 can be automatically switched to the continuous positioning mode 204 if the battery 109 for the clock generator 120 is replaced with a new battery.

In one embodiment, the controller 130 can select an operation mode, e.g., according to a user command. By way of example, if the GPS device 100 is in a relatively fast movement and/or in an unfamiliar environment, and/or if the GPS signals are relatively weak or unstable, the controller 130 can switch the GPS device 100 to the continuous positioning mode 204. If the GPS device 100 does not need to track the GPS signals continuously, e.g., in a relatively simple surrounding topography, the GPS device 100 can be enabled to work in the interval positioning mode 210 or the required positioning mode 216.

As such, the operation modes of the GPS device 100 can be switched according to the control signals from the controller 130. For example, in transition 206, the GPS device 100 can be switched from the continuous positioning mode 204 to the interval positioning mode 210 according to the software control commands 124 from the navigation software application of the controller 130. Similarly, in transition 208, the GPS device 100 can be switched back to the continuous positioning mode 204 according to software control commands 124 or an active FORCE_ON signal 126 from the controller 130. Other transitions such as transitions 218, 220, 212 and 214 can be enabled in a similar way.

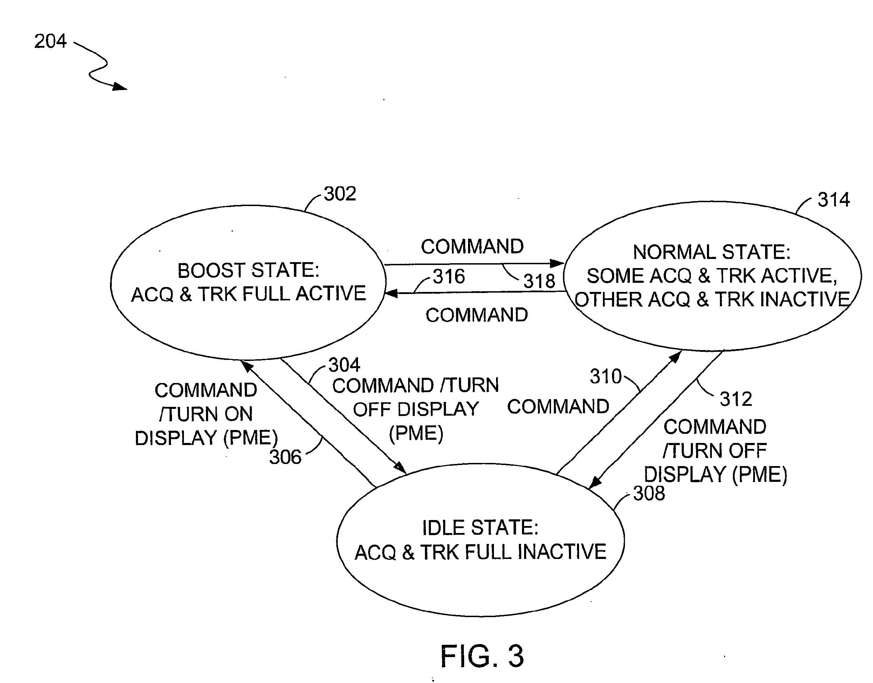

FIG. 3 illustrates an example of operation states of the GPS receiver 116 in the continuous positioning mode 204 of FIG. 2, in accordance with one embodiment of the present invention. FIG. 3 is described in combination with FIG. 1A, FIG. 1B and FIG. 2. In one embodiment, the flowchart in FIG. 3 can be implemented as machine-executable instructions stored in a machine-readable medium.

In the continuous positioning mode 204, the GPS receiver 116 is enabled to operate in one or more working states without entering the sleep state. The working states of the GPS receiver 116 can include an idle state 308, a normal state 314, and a boost state 302. in the example of FIG. 3, the power management interface 122 can switch the operation states of the GPS receiver 116 among the idle state 308, the normal state 314, and the boost state 302 according to the control signals from the controller 130.

If the controller 130 enables the continuous positioning mode 204, the GPS receiver 116 can enter the boost state 302 by default. In addition, if the display 134 is turned on or the controller 130 receives a command (e.g., from the user) to switch the GPS receiver 116 to the boost state 302, the controller 130 can generate a control signal to trigger a transition 306 or 316. For example, the controller 130 can generate an active PME signal 128. Accordingly, the power management interface 122 can generate the channel-switch signal 150 to enable all the channels 164. For example, the GPS device 100 may provide 12 acquisition channels and 14 tracking channels. In the boost state 302, all the 12 acquisition channels and 14 tracking channels are enabled. Thus, the GPS receiver 116 enters the boost state 302.

If the controller 130 receives a command (e.g., from the user) to switch the operation state to the normal state 314, the controller 130 can generate a control signal to trigger a state transition 310 or 318. By way of example, if at least a predetermined number of GPS satellites, e.g., four or more GPS satellites, are tracked in the boost state 302, the controller 130 can generate a control signal to trigger the transition 318, e.g., according to a user command. The power management interface 122 can generate the channel-switch signal 150 to enable some of channels 164. For example, four tracking channels are enabled to track the GPS satellites and the other tracking channels and all the acquisition channels are disabled. Thus, the GPS receiver 116 enters the normal state 314.

If the display 134 of the GPS device 100 is turned off or the controller 130 receives a command (e.g., from the user) to switch the GPS receiver 116 to the idle state 308, the controller 130 can generate a control signal, e.g., an inactive PME signal 128, to trigger a transition 304 or 312. Upon receiving the inactive PME signal 128, the power management interface 122 can generate the channel-switch signal 150 to disable all the channels. Thus, the GPS receiver 116 enters the idle state 308.

FIG. 4 illustrates a flowchart 400 of an operation process performed by the GPS receiver 116 in the continuous positioning mode 204, in accordance with one embodiment of the present invention. FIG. 4 is described in combination with FIG. 1A, FIG. 1B and FIG. 2. In one embodiment, the flowchart 400 in FIG. 4 can be implemented as machine-executable instructions stored in a machine-readable medium.

The power management interface 122 can automatically switch the GPS receiver 116 among different operation states according to the system needs. In the example of FIG. 4, the power management interface 122 monitors the channels 164, and switches the GPS receiver 116 among the idle state 308, the normal state 314, and the boost state 302 according to the statuses of the channels 164.

At step 402, the controller 130 selects the continuous positioning mode 204. At step 404, the GPS receiver 116 enters the boost state 302 by default.

At step 406, the power management interface 122 monitors the channels 164. If at least a predetermined number of GPS satellites are tracked, e.g., four or more GPS satellites are tracked, the power management interface 122 can automatically switch the GPS receiver 116 to the normal state 314 at step 414. In the normal state 314, the tracking channels that track the satellites are in operation. Other channels, e.g., the acquisition channels and other inactive tracking channels, can be disabled at step 414. As such, the GPS receiver 116 does not acquire GPS signals but keeps tracking the visible GPS satellites, in one embodiment.

At step 416, if the GPS receiver 116 loses the tracking of the GPS satellites, the power management interface 122 can automatically switch the GPS receiver 116 back to the boost state 302 at step 404. Otherwise, the GPS receiver 116 stays in the normal state 314.

At step 406, if less than the predetermined number of GPS satellites are tracked, the GPS receiver 116 can continue to acquire GPS signals from the GPS satellites for a predetermined time period T4 at step 408. If at least the predetermined number of GPS satellites are tracked during the predetermined time period T4 at step 408, the flowchart 400 goes back to the step 406. Steps following the step 406 have been described and will not be repetitively described herein. If at least the predetermined number of GPS satellites still can not be tracked after T4 expires, the power management interface 122 automatically switches the GPS receiver 116 to the normal state 314 at step 410. In the normal state 314, a predetermined number of the channels are enabled and other channels are disabled. For example, one acquisition channel is enabled to acquire the satellites and other acquisition channels are disabled. Additionally, the tracking channels that track the satellites are in operation. Other inactive tracking channels can be disabled at step 410.

At step 412, the power management interface 122 monitors the channels 164. If a new satellite is tracked, the GPS receiver 116 can be switched to the boost state 302 at step 404. Otherwise, the GPS receiver 116 stays in the normal state 314 until a new satellite is tracked. The GPS receiver 116 operating in the continuous positioning mode 204 can have other states and/or state transitions, and is not limited to the example of FIG. 3 and FIG. 4.

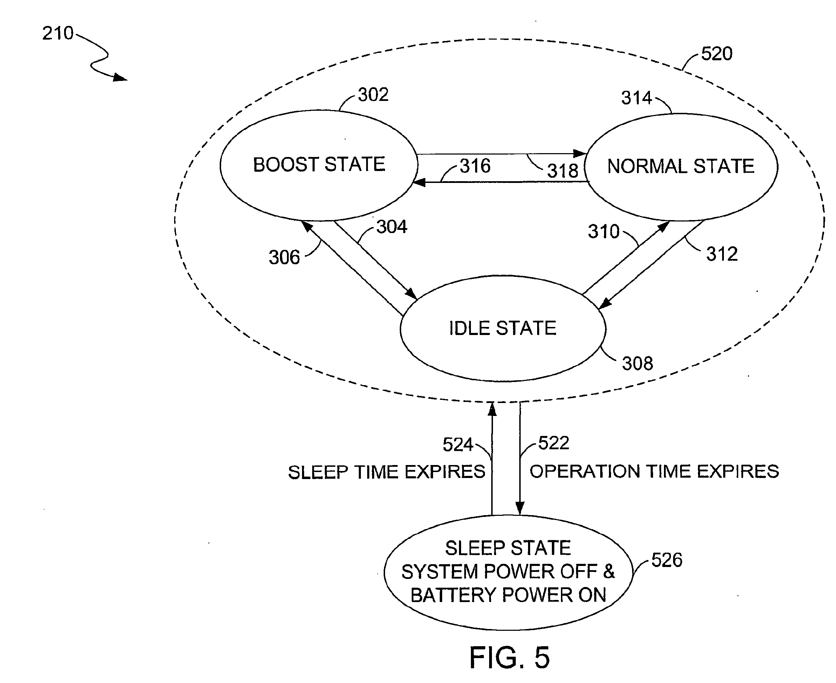

FIG. 5 illustrates an example of operation states of the GPS receiver 116 in the interval positioning mode 210 of FIG. 2, in accordance with one embodiment of the present invention. Elements labeled the same as in FIG. 3 have similar functions. FIG. 5 is described in combination with FIG. 1A and FIG. 3. In one embodiment, the flowchart in FIG. 5 can be implemented as machine-executable instructions stored in a machine-readable medium.

In the example of FIG. 5, the GPS receiver 116 in the interval positioning mode 210 can operate in one or more working states 520 and a sleep state 526. The controller 130 selects the interval positioning mode 210, e.g., according to a user command. The navigation software application of the controller 130 can prompt the user to set an operation time and a sleep time. The power management interface 122 can alternately enable the GPS receiver 116 to operate in the working states 520 for a first predetermined time period T1 according to the operation time, and operate in the sleep state 526 for a second predetermined time period T2 according to the sleep time.

By way of example, when the controller 130 selects the interval positioning mode 210, the GPS receiver 116 can first enter the working states 520 by default. The GPS receiver 116 operates in a similar way as described in relation to FIG. 3 or FIG. 4. The clock generator 120 can be used to time the working period of the working states 520. If the operation time expires, e.g., after the GPS receiver 116 operates in the working states 520 for the first predetermined time period T1, the power management interface 122 can automatically switch the GPS receiver 116 to the sleep state 526 through the transition 522. Alternatively, the controller 130 can generate control signals to switch the GPS receiver 100 from the working states 520 to the sleep state 526. For example, the controller 130 can generate an inactive FORCE_ON signal if a button on the GPS device 100 is pressed. Thus, the power management interface 122 can generate an inactive power-switch signal 152 to cut off the system power 108. Accordingly, the GPS receiver 116 can be switched to the sleep state 526 through the transition 522.

In the sleep state 526, the battery-switch signals 154 is active. Therefore, the clock generator 120 can also be used to time the sleep time of the sleep state 526. If the sleep time expires, e.g., after the GPS receiver 116 operates in the sleep state 526 for the second predetermined time period T2, the power management interface 122 can automatically switch the GPS receiver 116 to the working states 520 through the transition 524.

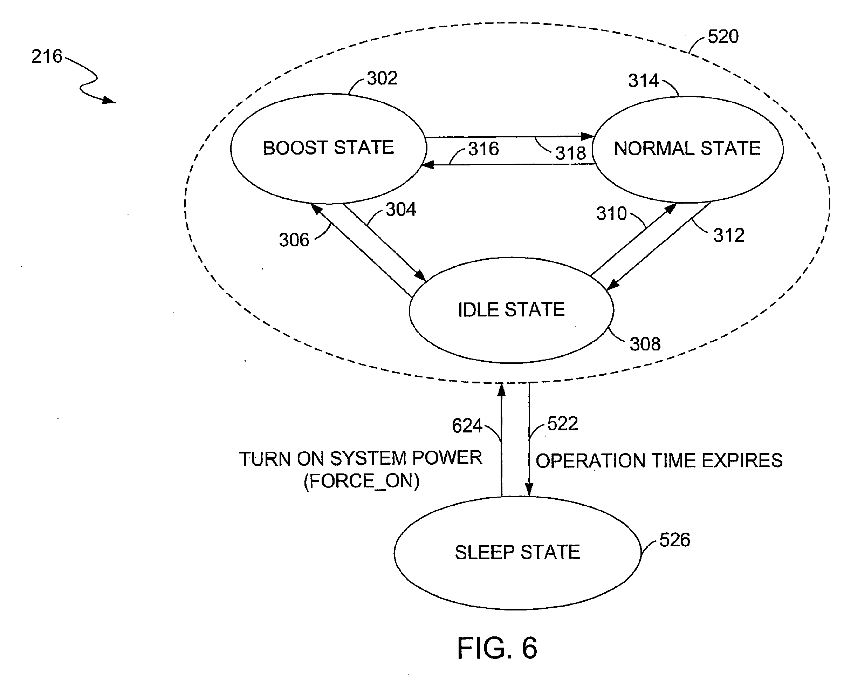

FIG. 6 illustrates an example of operation states of the GPS receiver 116 in the required positioning mode 216 of FIG. 2, in accordance with one embodiment of the present invention. Elements labeled the same as in FIG. 3 and FIG. 5 have similar functions. FIG. 6 is described in combination with FIG. 1A and FIG. 5. In one embodiment, the flowchart in FIG. 6 can be implemented as machine-executable instructions stored in a machine-readable medium.

In the example of FIG. 6, the GPS receiver 116 in the required positioning mode 210 can operate in the working states 520 and the sleep state 526. The navigation software application of the controller 130 can prompt the user to set an operation time. The power management interface 122 enables the GPS receiver 116 to operate in the working states 520 for a predetermined time period T3 according to the operation time, and operate in the sleep state 526 until receiving a control signal from the controller 130 to activate the GPS receiver 116.

Similar to the discussion in relation to FIG. 5, the GPS receiver 116 can enter the working states 520 by default, and can be switched to the sleep state 526 if the transition 522 is triggered. However, in the required positioning mode 216, the GPS receiver 116 is not automatically switched to the working states 520. Rather, the transition 624 is triggered when the power management interface 122 receives a control signal to activate the GPS receiver 116, e.g., the active FORCE_ON signal if the user presses a corresponding button.

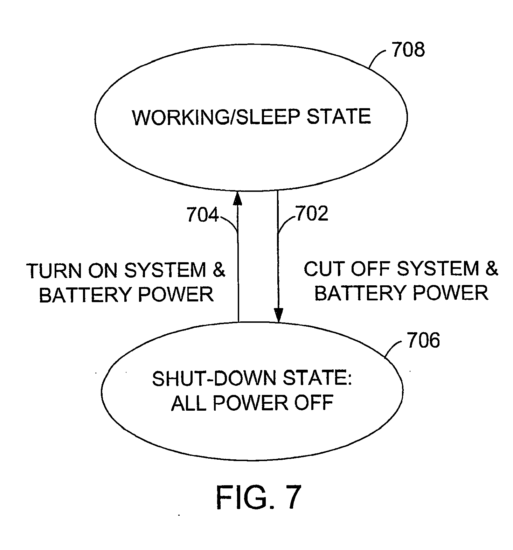

FIG. 7 illustrates another example of operation states of the GPS receiver 116, in accordance with one embodiment of the present invention. FIG. 7 is described in combination with FIG. 1A and FIG. 2- FIG. 6. In one embodiment, the flowchart in FIG. 7 can be implemented as machine-executable instructions stored in a machine-readable medium.

In one embodiment, the GPS receiver 116 can be switched to a shut-down state 706 regardless which mode/state the GPS receiver 116 operates in. For example, in block 708, the GPS receiver 116 operates in the working states 520 or the sleep state 526. In transition 702, the navigation software application of the controller 130 can generate a shut-down control command, e.g., if a shut-down button on the GPS device 100 is pressed. Thus, the power management interface 122 generates an inactive power-switch signal 152 to cut off the system power 108, and generates an inactive battery-switch signal 154 to cut off the battery power 110 in the shut-down state. In transition 704, the controller 130 switches the GPS receiver 116 back to the working states 520 or the sleep state 526 depending on the recovery of the system power 108 and the battery power 110. In block 708, the power management interface 122 can switch the GPS receiver 116 among different operation states such as the boost state 302, the normal state 314, the idle state 308, and the sleep state 526, as discussed in relation to FIG. 2 - FIG. 6.

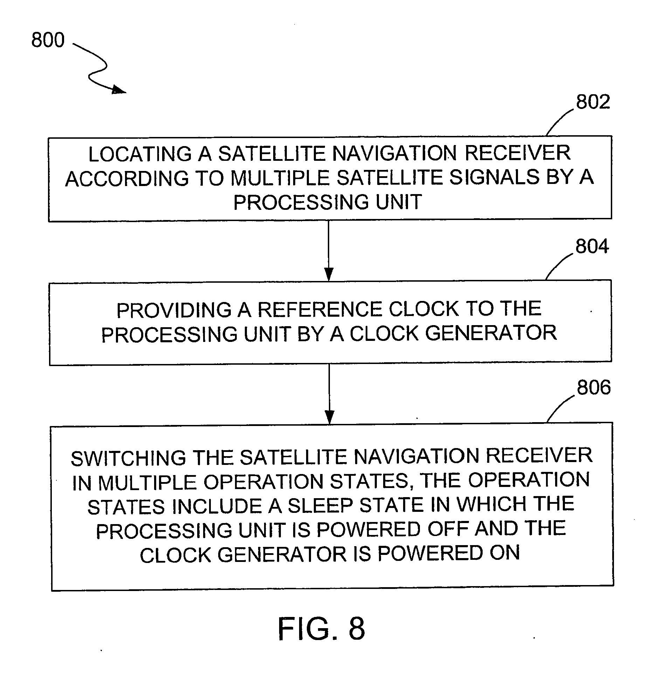

FIG. 8 illustrates a flowchart 800 of operations performed by a satellite navigation device, e.g., the GPS device 100, in accordance with one embodiment of the present invention. FIG. 8 is described in combination with FIG. 1A - FIG. 7. Although specific steps are disclosed in FIG. 8, such steps are examples. That is, the present invention is well suited to performing various other steps or variations of the steps recited in FIG. 8.

In block 802, a satellite navigation receiver, e.g., the GPS receiver 116, is located by a processing unit, e.g., the processing unit 118, according to multiple satellite signals, e.g., the GPS signals 103.

In block 804, a reference clock, e.g., the reference clock 156, is provided to the processing unit by a clock generator, e.g., the clock generator 120.

In block 806, the satellite navigation receiver including the processing unit and the clock generator is switched in multiple operation states. The operation states include a sleep state in which the processing unit is powered off and the clock generator is powered on. In one embodiment, the processing unit includes multiple channels, e.g., the channels 164, operable for acquiring and tracking multiple satellites that generate the satellite signals. The satellite navigation receiver can be switched to an idle state in which all of the channels are disabled when the processing unit is powered on. In one embodiment, the operation states further include a working state in which the processing unit and the clock generator are both powered on. The satellite navigation receiver is enabled to alternately operate in the working state for a predetermined time period T1 and operate in the sleep state for a predetermined time period T2. Alternatively, the satellite navigation receiver is enabled to operate in the working state for a predetermined time period T3 and operate in the sleep state until receiving a signal to activate the processing unit.

While the foregoing description and drawings represent embodiments of the present invention, it will be understood that various additions, modifications and substitutions may be made therein without departing from the scope of the principles of the present invention as defined in the accompanying claims. One skilled in the art will appreciate that the invention may be used with many modifications of form, structure, arrangement, proportions, materials, elements, and components and otherwise, used in the practice of the invention, which are particularly adapted to specific environments and operative requirements without departing from the principles of the present invention. The presently disclosed embodiments are therefore to be considered in all respects as illustrative and not restrictive, the scope of the invention being indicated by the appended claims and not limited to the foregoing description.

## Claims

1. A satellite navigation receiver (116) comprising:
a processing unit (118) operable for locating said satellite navigation receiver (116) according to a plurality of satellite signals (103), said processing unit (118) comprising a plurality of channels (164) operable for acquiring and tracking a plurality of satellites that provide said satellite signals (103);
a clock generator (120) coupled to said processing unit (118) and operable for providing a reference clock (156) to said processing unit (118); and
a power management interface (122) coupled to said processing unit (118) and said clock generator (120) and operable for switching said satellite navigation receiver (116) in a plurality of operation states (302, 308, 314, 520, 526),
wherein said operation states (302, 308, 314, 520, 526) comprise a sleep state (526) in which said processing unit (118) is powered off and said clock generator(120) is powered on,
**characterized in that**
said operation states (302, 308, 314, 520, 526) comprise an idle state (308) In which all of said channels (164) are disabled when said processing unit (118) is powered on.

2. The satellite navigation receiver (116) as claimed in claim 1, wherein a traveling time of said satellite signals (103) is measured based on said reference clock (156).

3. The satellite navigation receiver (116) as claimed in claim 1, wherein a time period of said sleep state (526) is measured based on said reference clock (156).

4. The satellite navigation receiver (116) as claimed in claim 1, further comprising:
a controller coupled to said power management interface (122) and operable for providing a plurality of control signals to said power management interface (122) to control said switching among said operation states (302, 308, 314, 520, 526).

5. The satellite navigation receiver (116) as claimed in claim 4, wherein said control signals are generated by a machine-executable navigation software application.

6. The satellite navigation receiver (116) as claimed in claim 4, wherein said control signals are generated in response to a hardware action.

7. The satellite navigation receiver (116) as claimed in claim 1, wherein said operation states (302, 308, 314, 520, 526) comprise a working state (520) in which said processing unit (118) and said clock generator (120) are both powered on, and wherein said power management interface (122) enables said satellite navigation receiver to alternately operate in said working state (520) for a first predetermined time period and operate in said sleep state (526) for a second predetermined time period.

8. The satellite navigation receiver (116) as claimed in claim 1, wherein said operation states (302, 308, 314, 520, 526) comprise a working state (520) in which said processing unit (118) and said clock generator (120) are both powered on, and wherein said power management interface (122) enables said satellite navigation receiver to operate in said working state (520) for a predetermined time period and operate in said sleep state (526) until receiving a signal to activate said processing unit (118).

9. A method for controlling a satellite navigation receiver (116), said method comprising:
locating said satellite navigation receiver (116) according to a plurality of satellite signals (103) by a processing unit (118) and providing said processing unit (118) with a plurality of channels (164) operable for acquiring and tracking a plurality of satellites that provide said satellite signals (103);
providing a reference clock (156) to said processing unit (118) by a clock generator (120); and
switching said satellite navigation receiver (116) in a plurality of operation states (302, 308, 314, 520, 526), wherein said operation states (302, 308, 314, 520, 526) comprise a sleep state (526) in which said processing unit (118) is powered off and said clock generator (120) is powered on,
**characterized in**
comprising switching said satellite navigation receiver (116) to an idle state (308) by disabling all of said channels (164) when said processing unit (118) is powered on.

10. The method as claimed in claim 9, further comprising:
enabling said satellite navigation receiver (116) to alternately operate in a working state (520) in which said processing unit (118) and said clock generator (120) are both powered on for a first predetermined time period (T1) and operate in said sleep state (526) for a second predetermined time period (T2).

11. The method as claimed in claim 9, further comprising:
enabling said satellite navigation receiver (116) to operate in a working state (520) in which said processing unit (118) and said clock generator (120) are both powered on for a predetermined time period (T3), and operate in said sleep state (526) until receiving a signal to activate said processing unit (118).

12. A satellite navigation device (100), comprising:
a satellite navigation receiver (116) according to any of claims 1 to 4;
a controller (130) coupled to said power management interface (122) of said satellite navigation receiver (116) and operable for controlling said switching among said operation states (302, 308, 314, 520, 526),; and
a display (134) coupled to said satellite navigation receiver (116) and operable for displaying a location of said satellite navigation device (100) based on said coordinate signals (105).

13. The satellite navigation device as claimed in claim 12, wherein said operation states (302, 308, 314, 520, 526) comprise a working state (520) in which said processing unit (118) and said clock generator (120) are both powered on, and wherein said satellite navigation receiver (116) is enabled to alternately operate in said working state (520) for a first predetermined time period (T1) and operate in said sleep state (526) for a second predetermined time period (T2).

14. The satellite navigation device as claimed in claim 12, wherein said operation states (302, 308, 314, 520, 526) comprise a working state (526) in which said processing unit (118) and said clock generator (120) are both powered on, and wherein said satellite navigation receiver (116) is enabled to operate in said working state (520) for a predetermined time period (T3) and operate in said sleep state (526) until said controller (130) activates said processing unit (118).

15. The satellite navigation device as claimed in claim 12, wherein said controller (118) monitors a status of said display (134), and controls said switching among said operation states (302, 308, 314, 520, 526) according to said status of said display (134).

16. The satellite navigation device as claimed in claim 12, wherein said switching among said operation states (302, 308, 314, 520, 526) is controlled by a machine-executable navigation software application installed in said controller (130).

17. The satellite navigation device as claimed in claim 12, wherein said controller (130) monitors statuses of a plurality of buttons on said satellite navigation device (100) and controls said switching among said operation states (302, 308, 314, 520, 526) according to said statuses of said buttons.

## Patentansprüche

1. Satellitennavigationsempfänger (116), umfassend:
eine Verarbeitungseinheit (118), die für die Ortung des Satellitennavigationsempfängers (116) gemäß einer Vielzahl von Satellitensignalen (103) betätigbar ist, wobei die Verarbeitungseinheit (118) eine Vielzahl von Kanälen (164) umfasst, die wirksam sind für die Akquirierung und Verfolgung einer Vielzahl von Satelliten, die die Satellitensignale (103) liefern;
einen Taktgenerator (120), der mit der Verarbeitungseinheit (118) gekoppelt ist und der betätigbar ist für die Lieferung eines Referenztakts (156) an die Verarbeitungseinheit (118);
und ein Power-Management-Interface (122), das mit der Verarbeitungseinheit (118) und mit dem Taktgenerator (120) gekoppelt ist und wirksam ist für das Schalten des Satellitennavigationsempfängers (116) in eine Vielzahl von Betriebszuständen (302, 308, 314, 520, 526), wobei die Betriebszustände (302, 308, 314, 520, 526) einen Sleep-Zustand (526) umfassen, in dem die Verarbeitungseinheit (118) abgeschaltet und der Taktgenerator (120) angeschaltet ist,
**dadurch gekennzeichnet, dass**
die Betriebszustände (302, 308, 314, 520, 526) einen Leerlaufzustand (308) umfassen, in dem alle Kanäle (164) gesperrt sind, wenn die Verarbeitungseinheit (118) angeschaltet ist.

2. Satellitennavigationsempfänger (116) nach Anspruch 1, wobei eine Laufzeit der Satellitensignale (103) auf der Grundlage des Referenztakts (156) gemessen wird.

3. Satellitennavigationsempfänger (116) nach Anspruch 1, wobei eine Zeitperiode des Sleep-Zustands (526) auf der Grundlage des Referenztakts (156) gemessen wird.

4. Satellitennavigationsempfänger (116) nach Anspruch 1, ferner umfassend:
einen Controller, der mit dem Power-Management-Interface (122) gekoppelt ist und der wirksam ist für die Lieferung einer Vielzahl von Steuersignalen an das Power-Management-Interface (122) für die Steuerung des Schaltens unter den Betriebszuständen (302, 308, 314, 520, 526).

5. Satellitennavigationsempfänger (116) nach Anspruch 4, wobei die Steuersignale durch eine auf Maschinen ausführbare Navigationssoftware-Anwendung erzeugt werden.

6. Satellitennavigationsempfänger (116) nach Anspruch 4, wobei die Steuersignale in Reaktion auf eine Hardware-Aktivität erzeugt werden.

7. Satellitennavigationsempfänger (116) nach Anspruch 1, wobei die Betriebszustände (302, 308, 314, 520, 526) einen Arbeitszustand (520) umfassen, in dem sowohl die Verarbeitungseinheit (118) als auch der Taktgenerator (120) angeschaltet sind, und in welchem das Power-Management-Interface (122) den Satellitennavigationsempfänger aktiviert, um alternierend für eine erste vorgegebene Zeitperiode in dem Arbeitszustand (520) und für eine zweite vorgegebene Zeitperiode in dem Sleep-Zustand (526) zu arbeiten.

8. Satellitennavigationsempfänger (116) nach Anspruch 1, wobei die Betriebszustände (302, 308, 314, 520, 526) einen Arbeitszustand (520) umfassen, in dem sowohl die Verarbeitungseinheit (118) als auch der Taktgenerator (120) angeschaltet sind, und in weichem das Power-Management-Interface (122) den Satellitennavigationsempfänger aktiviert, um für eine vorgegebene Zeitperiode in dem Arbeitszustand (520) und bis zu dem Empfang eines Signals für die Aktivierung der Verarbeitungseinheit (118) in dem Sleep-Zustand (526) zu arbeiten.

9. Verfahren zur Steuerung eines Satellitennavigationsempfängers (116), wobei das Verfahren umfasst:
das Orten des Satellitennavigationsempfängers (116) gemäß einer Vielzahl von Satellitensignalen (103) durch die Verarbeitungseinheit (118) und das Ausstatten der Verarbeitungseinheit (118) mit einer Vielzahl von Kanälen (164), die wirksam sind für das Akquirieren und Verfolgen einer Vielzahl von Satelliten, die die Satellitensignale (103) liefern;
das Liefern eines Referenztakts (156) an die Verarbeitungseinheit (118) durch einen Taktgeber (120); und
das Schalten des Satellitennavigationsempfängers (116) in eine Vielzahl von Betriebszuständen (302, 308, 314, 520, 526), wobei die Betriebszustände (302, 308, 314, 520, 526) einen Sleep-Zustand (526) umfassen, in dem die Verarbeitungseinheit (118) abgeschaltet und der Taktgenerator (120) angeschaltet ist,
**gekennzeichnet durch**
das Schalten des Satellitennavigationsempfängers (116) in einen Leerlaufzustand (308) **durch** eine Deaktivierung der Kanäle (164), wenn die Verarbeitungseinheit (118) angeschaltet wird.

10. Verfahren nach Anspruch 9, ferner umfassend:
das Aktivieren des Satellitennavigationsempfängers (116), um alternierend in einem Arbeitszustand (520) zu arbeiten, in dem die Verarbeitungseinheit (118) und der Taktgenerator (120) beide für eine erste vorgegebene Zeitperiode (T1) angeschaltet sind, und um in für eine zweite vorgegebene Zeitperiode (T2) in dem Sleep-Zustand zu arbeiten.

11. Verfahren nach Anspruch 9, ferner umfassend:
die Aktivierung des Satellitennavigationsempfängers (116), um in einem Arbeitszustand (520) zu arbeiten, in dem die Verarbeitungseinheit (118) und der Taktgeber (120) beide für eine vorgegebene Zeitperiode (T3) angeschaltet sind, und um in dem Sleep-Zustand (526) zu arbeiten, bis ein Signal für die Aktivierung der Verarbeitungseinheit (118) empfangen wird.

12. Satellitennavigationsvorrichtung (100), umfassend:
einen Satellitennavigationsempfänger (116) gemäß einem der Ansprüche 1 bis 4;
einen Controller (130), der mit dem Power-Management-Interface (122) des Satellitennavigationsempfängers (116) gekoppelt ist und wirksam ist für die Steuerung des Schaltens unter den Betriebszuständen (302, 308, 314, 520, 526); und
ein Display (134), das mit dem Satellitennavigationsempfänger (116) gekoppelt ist und wirksam ist für die Anzeige eines Orts der Satellitennavigationsvorrichtung (100) auf der Grundlage der Koordinatensignale (105).

13. Satellitennavigationsvorrichtung nach Anspruch 12, wobei die Betriebszustände (302, 308, 314, 520, 526) einen Arbeitszustand (520) umfassen, in dem die Verarbeitungseinheit (118) und der Taktgenerator (120) beide angeschaltet sind, und wobei der Satellitennavigationsempfänger (116) aktiviert ist, um alternierend für eine erste vorgegebene Zeitperiode (T1) in dem Arbeitszustand (520) und für eine zweite vorgegebene Zeitperiode (T2) in dem Sleep-Zustand (526) zu arbeiten.

14. Satellitennavigationsvorrichtung nach Anspruch 12, wobei die Betriebszustände (302, 308, 314, 520, 526) einen Arbeitszustand (526) umfassen, in dem die Verarbeitungseinheit (118) und der Taktgenerator (120) beide angeschaltet sind, und wobei der Satellitennavigationsempfänger (116) aktiviert ist, um für eine vorgegebene Zeitperiode (T3) in dem Arbeitszustand und bis zur Aktivierung der Verarbeitungseinheit (118) durch den Controller (130) in dem Sleep-Zustand zu arbeiten.

15. Satellitennavigationsvorrichtung nach Anspruch 12, wobei der Controller (118) einen Status des Displays (134) überwacht und das Schalten zwischen den Betriebszuständen (302, 308, 314, 520, 526) gemäß dem Status des Displays (134) steuert.

16. Satellitennavigationsvorrichtung nach Anspruch 12, wobei das Schalten zwischen den Betriebszuständen (302, 308, 314, 520, 526) durch eine auf einer Maschine ausführbare Navigationssoftware-Anwendung, die in dem Controller (130) installiert ist, gesteuert wird.

17. Satellitennavigationsvorrichtung nach Anspruch 12, wobei der Controller (130) Status einer Vielzahl von Tasten an der Satellitennavigationsvorrichtung (100) überwacht und das Schalten zwischen den Betriebszuständen (302, 308, 314, 520, 526) gemäß den Status der Tasten steuert.

## Revendications

1. Récepteur de navigation de satellite (116), comportant :
une unité de traitement (118) adaptée pour localiser ledit récepteur de navigation de satellite (116) selon une pluralité de signaux satellites (103), ladite unité de traitement comprenant une pluralité de canaux (164) adaptés pour acquérir et traquer une pluralité de satellites fournissant les signaux satellites (103) ;
un générateur d'impulsions de rythme (120) accouplé à l'unité de traitement (118) et adapté pour fournir à l'unité de traitement (118) un impulsion de rythme de référence ; et
une interface de gestion de l'énergie (122) accouplée à l'unité de traitement (118) et au générateur d'impulsions de rythme (120) et adaptée pour commuter le récepteur de navigation de satellite (116) à une pluralité d'états de fonctionnement (302, 308, 314, 520, 526), lesdits états de fonctionnement (302, 308, 314, 520, 526) comprenant un état de repos (526) auquel l'unité de traitement (118) est mise hors courant et le générateur d'impulsions de rythme (120) et mis au courant,
**caractérisé en ce que**
les états de fonctionnement (302, 308, 314, 520, 526) comprennent un état de temps mort (308) auquel tous les canaux (164) sont désactivés lorsque l'unité de traitement (118) est activée.

2. Récepteur de navigation de satellite (116) selon la revendication 1, dans lequel un temps de propagation des signaux satellites (103) est mesuré à base de l'impulsion de rythme de référence (156).

3. Récepteur de navigation de satellite (116) selon la revendication 1, dans lequel la période de l'état de repos (526) est mesurée à la base de l'impulsion de rythme de référence (156).

4. Récepteur de navigation de satellite (116) selon la revendication 1, comportant en outre :
un contrôleur accouplé à l'interface de gestion de l'énergie (122) et adapté pour fournir à l'interface de gestion de l'énergie (122) une pluralité de signaux pilotes pour commander la commutation entre les états de fonctionnement (302, 308, 314, 520, 526).

5. Récepteur de navigation de satellite (116) selon la revendication 4, dans lequel les signaux pilotes sont générés par une application de software de navigation exécutable par machine.

6. Récepteur de navigation de satellite (116) selon la revendication 4, dans lequel les signaux pilotes sont générés en fonction d'une activité de hardware.

7. Récepteur de navigation de satellite (116) selon la revendication 1, dans lequel les états de fonctionnement (302, 308, 314, 502, 526) comprennent un état actif (520), auquel l'unité de traitement (118) et le générateur d'impulsions de rythme (120) sont mises au courant et auquel le récepteur de navigation de satellite est activé par l'interface de gestion de l'énergie (122) afin de fonctionner de manière alternante à l'état actif pendant une première période prédéterminée et à l'état de repos (526) pendant une deuxième période prédéterminée.

8. Récepteur de navigation de satellite (116) selon la revendication 1, dans lequel les états de fonctionnement (302, 308, 314, 502, 526) comprennent un état actif (520), auquel l'unité de traitement (118) et le générateur d'impulsions de rythme (120) sont mises au courant et auquel le récepteur de navigation de satellite est activé par l'interface de gestion de l'énergie (122) afin de fonctionner à l'état actif (520) pendant une période prédéterminée et afin de fonctionner à l'état de repos (526) jusqu'à la réception d'un signal pour activer l'unité de traitement (118).

9. Procédé de commande de récepteur de navigation de satellite (116), ledit procédé comprenant les étapes de :
localiser le récepteur de navigation de satellite (116) selon une pluralité de signaux satellites (103) par une unité de traitement (118) et fournir l'unité de traitement (118) d'une pluralité de canaux (164) adaptés pour acquérir et traquer une pluralité de satellites fournissant les signaux satellites (103) ;
fournir à l'unité de traitement (118) un impulsion de rythme de référence (156) par un générateur d'impulsions de rythme (120) ; et
commuter le récepteur de navigation de satellite (114) à une pluralité d'états (302, 308, 314, 520, 526), lesdits états de fonctionnement (302, 308, 314, 520, 526) comprenant un état de repos (526), auquel l'unité de traitement (118) est hors courant et le générateur d'impulsions de rythme (120) est au courant,
**caractérisé en ce**
**que** le procédé comprend la commutation du récepteur de navigation de satellite à un état de temps mort (308) par la désactivation des canaux (164) lorsque l'unité de traitement (118) est mise au courant.

10. Procédé selon la revendication 9, comprenant en outre :
l'activation du récepteur de navigation de satellite (116) pour son opération de manière alternante à un état actif (520), auquel l'unité de traitement (118) et le générateur d'impulsions de rythme (120) sont mises au courant pendant une première période prédéterminée (T1) et sont à l'état de repos (526) pendent une deuxième période prédéterminée (T2).

11. Procédé selon la revendication 9, comprenant en outre :
l'activation du récepteur de navigation de satellite (116) pour son opération à un état actif (520), auquel l'unité de traitement (118) et le générateur d'impulsions de rythme (120) sont mises au courant pendant une période prédéterminée (T3) et sont à l'état de repos (526) jusqu'à la réception d'un signal pour l'activation de l'unité de traitement (118).

12. Dispositif de navigation de satellite (100), comportant :
un récepteur de navigation de satellite (116) selon l'une des revendications 1 à 4 ;
un contrôleur (130) accouplé à l'interface de gestion de l'énergie (122) du récepteur de navigation de satellite (116) et adapté pour commander la commutation entre les états de fonctionnement (302, 308, 314, 520, 526) ; et
un écran (134) accouplé au récepteur de navigation de satellite (116) et adapté pour afficher un lieu du dispositif de navigation de satellite (100) à base des signaux de coordonnées (105).

13. Dispositif de navigation de satellite selon la revendication 12, dans lequel les états de fonctionnement (302, 308, 314, 520, 526) comprennent un état actif (520), auquel l'unité de traitement (118) et le générateur d'impulsions de rythme (120) sont mises au courant et auquel le récepteur de navigation de satellite (116) est activé pour opérer de manière alternante à l'état actif (520) pendent une première période prédéterminée (T1) et pour opérer à l'état de repos (526) pendent une deuxième période prédéterminée (T2).

14. Dispositif de navigation de satellite selon la revendication 12, dans lequel les états de fonctionnement (302, 308, 314, 520, 526) comprennent un état actif (526), auquel l'unité de traitement (118) et le générateur d'impulsions de rythme (120) sont mises au courant et auquel le récepteur de navigation de satellite (116) est activé pour opérer à l'état actif (520) pendent une première période prédéterminée (T3) et pour opérer à l'état de repos (526) jusqu'a l'unité de traitement (118) est activée par le contrôleur (130).

15. Dispositif de navigation de satellite selon la revendication 12, dans lequel le contrôleur (118) surveille un état de l'écran (134) et contrôle la commutation entre les états de fonctionnement (302, 308, 314, 520, 526) selon l'état de l'écran (134).

16. Dispositif de navigation de satellite selon la revendication 12, dans lequel la commutation entre les états de fonctionnement (302, 308, 314, 520, 526) est commandée par une application de software de navigation exécutable par machine et installé dans le contrôleur (130).

17. Dispositif de navigation de satellite selon la revendication 12, dans lequel le contrôleur (130) surveille des états d'une pluralité de boutons sur le dispositif de navigation de satellite (100) et commande la commutation entre les états de fonctionnement (302, 308, 314, 520, 526) selon les états des boutons.
